# EUROPÄISCHE PATENTSCHRIFT

(11) **EP 1 408 305 B1**
(45) Veröffentlichungstag und Bekanntmachung des Hinweises auf die Patenterteilung: **23.07.2008**
(21) Anmeldenummer: 03021091.8
(22) Anmeldetag: 18.09.2003
(51) Int. Cl.: G01D 5/04

(54) **Vorrichtung zum Erfassen des Absolutwinkels einer Welle**
Device for measuring the absolute angle of a shaft
Dispositif de mesure de l'angle absolu d'un arbre tournant

(30) Priorität: 10.10.2002 DE 10247360
(43) Veröffentlichungstag der Anmeldung: 14.04.2004
(73) Patentinhaber: ebm-papst St. Georgen GmbH & Co. KG, 78112 St. Georgen (DE)
(72) Erfinder: Hahn, Alexander, D-78253 Eigeltingen-Heudorf (DE)
(74) Vertreter: Raible, Tobias

(56) Entgegenhaltungen:
- DE-A1- 10 060 574
- DE-A1- 19 820 014

## Beschreibung

Die Erfindung betrifft eine Vorrichtung zum Erfassen des Absolutwerts der Drehstellung einer Welle.

In zahlreichen technischen Gebieten, etwa der Robotik, der Kraftfahrzeug- oder der Handhabungstechnik, werden als Stellantriebe Elektromotoren eingesetzt, deren Abmessungen oft nur im Bereich weniger Zentimeter liegen. In der Regel ist es bei derartigen Anwendungen erforderlich, Informationen bezüglich der räumlichen Lage des von dem Elektromotor angetriebenen Teils zu ermitteln. Diese Lageinformationen können sich z.B. auf die Öffnungsweite eines Greifers oder die Höhe eines elektrisch verstellbaren Fahrzeugsitzes beziehen. Anhand dieser Lageinformationen kann eine Steuerung beispielsweise bestimmen, wie viele Umdrehungen der Elektromotor auszuführen hat, um das betreffende Teil in eine neue gewünschte Position zu überführen.

Zur Lagebestimmung derartiger von Stellmotoren angetriebener Teile sind verschiedene Konzepte entwickelt worden. Zum einen ist es natürlich möglich, die räumliche Lage des angetriebenen Teils unmittelbar zu erfassen. Bei dem Beispiel des elektrisch in der Höhe verstellbaren Kraftfahrzeugsitzes würde dies bedeuten, dass dessen Höhe unmittelbar gegenüber einem festen Referenzpunkt mit Hilfe einer geeigneten Sensorik gemessen wird. Eine solche unmittelbare Lageerfassung ist aber in vielen Fällen sehr aufwendig, da die Sensorik an den jeweiligen Verwendungszweck speziell angepasst sein muss.

Günstiger sind daher Konzepte, bei denen die räumliche Lage der Anordnung nur mittelbar über die Winkelposition der Welle des Elektromotors bestimmt wird. Eine solche mittelbare Lagebestimmung ist immer dann möglich, wenn das Teil von dem Elektromotor schlupffrei angetrieben wird. Je nach Anwendung kann es dabei ausreichen, lediglich die Zahl der seit einem Referenzzeitpunkt erfolgten Umdrehungen der Welle festzustellen. Falls höhere Anforderungen an die Genauigkeit der Lagebestimmung gestellt werden, kann auch die Winkelposition der Welle innerhalb einer einzigen Umdrehung erfasst und zur Lagebestimmung des angetriebenen Teils verwendet werden.

Eine solche Erfassung sowohl der Zahl der Umdrehungen der Welle als auch deren Winkelposition innerhalb einer Umdrehung bedeutet nichts anderes, als dass die absolute Winkelposition der Welle bestimmt wird. So entsprechen etwa 2 Umdrehungen und 22° in positiver Drehrichtung einem Absolutwinkel von 742°. Ist also der Zusammenhang zwischen der räumlichen Lage des von dem Elektromotor angetriebenen Teils und dem Absolutwinkel etwa durch eine Kalibrierung einmal ermittelt worden, so kann bei Kenntnis des Absolutwinkels auf die Lage des Teils zurückgeschlossen werden.

Um den Absolutwinkel der Welle eines Elektromotors zu erfassen, kann auf elektronische Umdrehungszähler zurückgegriffen werden. Dabei wird ausgenutzt, dass gerade als Stellantriebe eingesetzte Elektromotoren häufig elektronisch kommutiert werden. Bei der elektronischen Kommutierung wird - allerdings nur über eine Umdrehung hinweg - die Winkelposition der Welle genau erfasst, um auf diese Weise den Motor je nach der momentanen relativen räumlichen Anordnung zwischen Stator und Rotor optimal mit Spannung beaufschlagen zu können. Die hierfür eingesetzten absoluten Drehgeber liefern ein periodisches Ausgangssignal, so dass mit Hilfe einer geeigneten elektronischen Auswertung auch die Zahl der Umdrehungen ermittelt werden kann.

Nachteilig bei dieser Lösung ist allerdings, dass nach einem Ausfall der Versorgungsspannung der Drehgeber zwar in der Lage ist, die absolute Winkelposition der Welle wieder zu erfassen. Jedoch ist die Information, wie viele Umdrehungen die Welle des Elektromotors bereits zurückgelegt hat, durch den Ausfall der Versorgungsspannung verlorengegangen. Als Folge davon muss der Stellantrieb dann mit Hilfe von Referenzpunktdaten o.ä. wieder neu kalibriert werden, was hohe Kosten verursacht. Ein Rückgriff auf eine batteriegepufferte Spannungsversorgung ist zwar grundsätzlich möglich, verursacht aber zusätzliche Fertigungskosten und erfordert darüber hinaus auch eine regelmäßige Wartung, da die Batterien turnusmäßig ausgewechselt oder nachgeladen werden müssen.

Um diese mit elektronischen Umdrehungszählern verbundenen Nachteile zu vermeiden, werden inzwischen vielfach Drehgeber eingesetzt, die auf mechanischem Weg nicht nur die Winkelposition innerhalb einer Umdrehung der Welle erfassen, wie dies bei den sogenannten Singleturn-Drehgebern der Fall ist, sondern eine Absolutwertbestimmung der Winkelposition auch über mehrere Umdrehungen hinweg ermöglichen. Derartige Drehgeber werden häufig als "Multiturn-Drehgeber" bezeichnet, was zum Ausdruck bringen soll, dass die Winkelposition auch über mehrere Umdrehungen hinweg absolut bestimmt werden kann. Diese mechanischen Multiturn-Drehgeber reduzieren die Motordrehzahl in einer oder mehreren Getriebestufen. Der Abtrieb einer jeden Getriebestufe wird mit Hilfe geeigneter Sensoren erfasst, wodurch sich die absolute Winkelposition zuverlässig und unabhängig von der Spannungsversorgung genau ermitteln lässt. Das Funktionsprinzip gleicht insoweit einer mechanischen Zeigeruhr, bei der es ebenfalls möglich ist, anhand der Winkelposition des Sekunden-, des Minuten- und des Stundenzeigers den Absolutwinkel des Sekundenzeigers über 24 Stunden hinweg zu ermitteln.

Ein Multiturn-Drehgeber dieser Art ist aus der eingangs bereits genannten DE 198 20 014 A1 bekannt. Dieser mechanische Drehgeber besteht im wesentlichen aus einem Singleturn-Drehgeber, der der Ermittlung der Winkelposition innerhalb einer Umdrehung dient, und einer Multiturn-Drehgebereinheit zur Bestimmung der Zahl der Umdrehungen. Der Singleturn-Drehgeber wird bei dieser bekannten Vorrichtung von einer Code-Scheibe gebildet, die direkt mit der Welle gekoppelt ist, deren Winkelposition bestimmt werden soll. Die Codescheibe trägt eine lichtelektrisch, magnetisch, kapazitiv oder induktiv abtastbare Codierung, durch die eine Umdrehung der Welle in eine Vielzahl von unterscheidbaren Sektoren aufgeteilt wird. Diese Codierung wird von einer Abtasteinrichtung abgetastet, die ein mehrstelliges, mit der absoluten Winkelposition korreliertes Codewort erzeugt. Die Multiturn-Drehgebereinheit des bekannten Drehgebers weist ein mit der Welle gekoppeltes Untersetzungsgetriebe auf, dessen Abtrieb von einem Singleturn-Drehgeber winkelmäßig erfasst wird. Dieser Abtrieb ist mit einem zweiten Untersetzungsgetriebe verbunden, dessen Abtrieb ebenfalls mit Hilfe eines Singleturn-Drehgebers erfasst wird. Die vorstehend genannten Teile dieser Vorrichtung sind dabei in axialer Richtung hintereinander angeordnet, wobei insbesondere der Antrieb und der Abtrieb eines jeden Untersetzungsgetriebes koaxial ausgerichtet sind, wie dies der üblichen Bauart kleiner derartiger Untersetzungsgetriebe entspricht.

Derartige auf Untersetzungsgetrieben basierende Multiturn-Drehgeber haben allerdings im Vergleich zu elektronischen Umdrehungszählern den Nachteil, dass sie in ihren Abmessungen - zumindest im Vergleich zu den Elektromotoren - recht groß sind. Bei vielen Anwendungen jedoch, bei denen elektromotorische Stellantriebe eingesetzt werden, ist der zur Verfügung stehende Bauraum sehr knapp bemessen, so dass sich diese mechanischen Multiturn-Drehgeber nicht immer ohne weiteres integrieren lassen.

Es ist daher Aufgabe der Erfindung, eine kompakte Vorrichtung zum Erfassen des Absolutwinkels einer Welle eines Elektromotors der eingangs genannten Art anzugeben.

Nach der Erfindung wird diese Aufgabe durch eine Vorrichtung mit den Merkmalen des Patentanspruchs 1 gelöst.

Da das von dem Untersetzungsgetriebe angetriebene Drehelement, dessen Winkelposition von dem zweiten Singleturn-Drehgeber erfasst wird, nicht wie üblich von einem in Verlängerung der Motorwelle angeordneten Getriebeabtrieb, sondern von außen um den ersten Singleturn-Drehgeber herum angetrieben wird, ist keine durch die gesamte Vorrichtung sich in axialer Richtung hindurch erstreckende Welle erforderlich. Dementsprechend geht in axialer Richtung auch kein Bauraum durch Lager verloren, die zur Stützung einer solchen Welle normalerweise erforderlich wären. Die beiden Singleturn-Drehgeber und das Untersetzungsgetriebe können somit praktisch unmittelbar aneinander angrenzend in axialer Richtung hintereinander angeordnet sein, wodurch sich eine sehr geringe Baulänge ergibt.

Da das Untersetzungsgetriebe unmittelbar auf die Welle aufgesetzt ist, sind außerdem keinerlei Kupplungen erforderlich, wie sie üblicherweise zur Verbindung zwischen der Welle des Elektromotors und dem Untersetzungsgetriebe verwendet werden. Auch dies trägt zur Verkürzung der Baulänge in axialer Richtung bei. Das Untersetzungsgetriebe kann aus diesem Grund ggf. auch in das Gehäuse des Elektromotors aufgenommen werden, da dort häufig über dem Wellenlager jenseits des Rotors noch Bauraum geschaffen werden kann. Auf diese Weise lässt sich eine äußerst kompakte Einheit aus Elektromotor und Multiturn-Drehgeber aufbauen, die erheblich kürzer ist als die herkömmliche Anordnung eines Elektromotors mit einem daran angekoppelten Multiturn-Drehgeber.

Selbstverständlich können der Multiturn-Drehgebereinheit weitere Multiturn-Drehgebereinheiten nachgeschaltet sein, so dass sich ein drei- oder mehrstufiger Aufbau ergibt. Ein zweites Untersetzungsgetriebe kann dann entweder in der erfindungsgemäßen Weise, d.h. von außen um das Drehelement herum, ein weiteres Drehelement antreiben, oder der Abtrieb des weiteren Untersetzungsgetriebes erfolgt in an sich bekannter Weise in einer gedachten Verlängerung der Motorwelle.

Bei einer besonders vorteilhaften Ausgestaltung der Erfindung ist der Abtrieb als Abtriebsring ausgeführt, der durch den Elektromotor in eine zu der Welle koaxiale Bewegung versetzbar ist. Auf diese Weise kann das Verbindungsteil radial von der Welle beabstandet an dem Getriebe angreifen. Anstelle eines geschlossenen Rings kann auch ein durchbrochener oder nicht geschlossener Ring, oder sogar nur ein Bügel, als Abtriebsring vorgesehen sein.

Vorzugsweise ist dann das Verbindungsteil als ein annähernd winkelförmiger Kragbügel ausgebildet, der an dem Abtriebsring angreift. Das Verbindungselement kann jedoch beispielsweise auch ein größerer Ausschnitt aus einem Zylindermantel oder eine Konstruktion aus mehreren gitterartig miteinander verbundenen Bügeln sein.

Bei einer anderen vorteilhaften Ausgestaltung der Erfindung umfassen ein oder beide Singleturn-Drehgeber jeweils einen Sensor, insbesondere einen GMR-Sensor (GMR = giant magneto resistor), und einen damit zusammenwirkenden Permanentmagneten. Dieser Permanentmagnet kann bei dem ersten Singleturn-Drehgeber auf einer Stirnseite der Welle angeordnet sein, während er bei dem zweiten Singleturn-Drehgeber auf dem Drehelement angeordnet sein kann. Das Drehelement hat somit lediglich die Aufgabe, den Permanentmagneten zu halten. Magnetsensoren sind besonders gut geeignet für kontaktlose Positionsmessungen und funktionieren auch unter schwierigen Bedingungen sehr zuverlässig, etwa in feuchter oder schmutziger Umgebung und bei extremen Temperaturen. Verglichen mit herkömmlichen Hall-Sensoren haben GMR-Sensoren den Vorteil, nur die Richtung von Magnetfeldlinien, nicht aber deren Intensität zu erfassen. Dadurch werden Montage und Justieren dieser Art von Sensoren und die Massenproduktion kostengünstiger.

Da die erfindungsgemäße Vorrichtung eine in axialer Richtung sehr dichte Anordnung der Sensoren und der damit zusammenwirkenden Permanentmagneten ermöglicht, kann es vorteilhaft sein, die beiden Drehgeber durch eine magnetische Abschirmung zumindest teilweise voneinander magnetisch zu entkoppeln. Auf diese Weise wird die Gefahr von Messfehlern verringert.

Vorzugsweise ist eine derartige Abschirmung unmittelbar auf dem Drehelement angeordnet. Möglich ist jedoch auch eine Befestigung der Abschirmung an einem Sensorträger, der die Sensoren des ersten und des zweiten Singleturn-Drehgebers hält. Zweckmäßig ist dies insbesondere dann, wenn der Sensorträger ein Trägerteil aufweist, auf dessen Ober- bzw. Unterseite die Sensoren des ersten und des zweiten Singteturn-Drehgebers befestigt sind. Diese Anordnung der beiden Sensoren sozusagen "Rücken an Rücken" ermöglicht eine nochmalige Verringerung der axialen Baulänge, da auf diese Weise auf einen zweiten Arm des Sensorträgers verzichtet werden kann.

Im Falle geringerer Anforderungen an die Präzision, mit der die Winkelposition der Welle erfasst wird, kann es genügen, lediglich die von dem zweiten Singleturn-Drehgeber in der Multiturn-Drehgebereinheit erfassten Werte auszuwerten. Ob allein mit dieser Auswertung auch eine wenigstens grobe Bestimmung der absoluten Winkelposition der Welle innerhalb einer Umdrehung möglich ist, hängt neben der Messgenauigkeit des zweiten Singleturn-Drehgebers vor allem vom Untersetzungsverhältnis des Untersetzungsgetriebes ab. Bei sehr großen Untersetzungsverhältnissen kann der zweite Singleturn-Drehgeber im wesentlichen nur noch die Umdrehungszahl ermitteln, während bei kleinen Untersetzungsverhältnissen auch noch Rückschlüsse auf die ungefähre Winkelposition der Welle innerhalb einer Umdrehung möglich sind. Die von dem ersten Singleturn-Drehgeber erfassten Winkelpositionen innerhalb einer Umdrehung werden dann z.B. lediglich für die elektronische Kommutierung des Elektromotors ausgewertet.

Bei höheren Anforderungen an die Präzision wird es hingegen zweckmäßig sein, sowohl den ersten als auch den zweiten Singleturn-Drehgeber mit einer Auswerteeinrichtung zu verbinden. Die Auswerteeinrichtung kann dann in an sich bekannter Weise die mit Hilfe des ersten Singleturn-Drehgebers erfasste absolute Winkelposition innerhalb einer einzigen Umdrehung und andererseits die mit Hilfe des zweiten Singleturn-Drehgebers ermittelte Anzahl der Umdrehungen zur besonders präzisen Bestimmung des Absolutwinkels verwenden.

Weitere Merkmale und Vorteile der Erfindung ergeben sich aus der nachfolgenden Beschreibung eines Ausführungsbeispiels anhand der Zeichnung. Darin zeigen:
- Fig. 1:: eine stark schematisierte Darstellung einer ersten Ausführungsform einer erfindungsgemäßen Vorrichtung in Draufsicht;
- Fig. 2:: die Vorrichtung aus Fig. 1 in einem axialen Schnitt entlang der Linie II-II;
- Fig. 3:: ein an die schematische Darstellung der Fig. 1 angelehntes zweites Ausführungsbeispiel der Erfindung, in dem nähere Einzelheiten in einem axialen Schnitt gezeigt sind; und
- Fig. 4:: eine schematische Darstellung eines dritten Ausführungsbeispiels der Erfindung in Draufsicht ähnlich wie in Fig. 1.

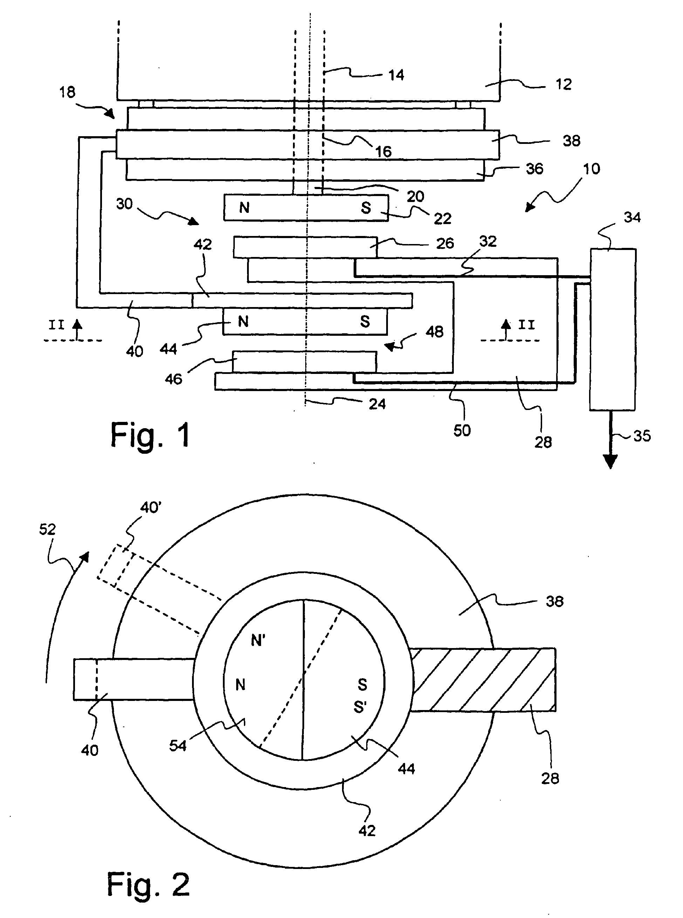

In **Fig. 1** ist eine Vorrichtung zum Erfassen der absoluten Winkelposition einer Welle eines Elektromotors schematisch und nicht maßstabsgerecht gezeigt und insgesamt mit 10 bezeichnet.

Die Vorrichtung 10 ist an einem mit 12 angedeuteten Elektromotor über dessen Welle 14 angekoppelt. Auf einem der Antriebsseite der Welle 14 gegenüberliegenden Wellenstutzen 16 ist ein Untersetzungsgetriebe 18 derart aufgesetzt, das der Wellenstutzen 16 das Untersetzungsgetriebe 18 vollständig durchdringt. An einem aus dem Untersetzungsgetriebe 18 stirnseitig hervortretenden Ende 20 des Wellenstutzens 16 ist ein erster Steuermagnet 22 drehfest befestigt. Im Betrieb des Elektromotors 12 dreht sich somit der erste Steuermagnet 22 synchron mit der Welle 14 um die mit 24 angedeutete Drehachse.

Unmittelbar gegenüber des ersten Steuermagnets 22 ist ein erster Sensor 26 raumfest angeordnet, der von einem Sensorträger 28 gehalten ist. Weil der Sensorträger 28 in nicht näher dargestellter Weise drehfest gegenüber dem Elektromotor 12 angeordnet ist, rotiert der erste Steuermagnet 22 relativ zu dem ersten Sensor 26 mit der Drehfrequenz der Welle 14.

Der erste Steuermagnet 22 und der damit zusammenwirkende erste Sensor 26 bilden gemeinsam einen ersten Singleturn-Drehgeber 30, der es ermöglicht, die absolute Winkelposition des ersten Steuermagneten 22 und damit diejenige der Welle 14 innerhalb einer Umdrehung zu erfassen. Der erste Sensor 26 ist hierzu über eine mit 32 angedeutete Leitung mit einer Auswerteeinrichtung 34 verbunden.

Das Untersetzungsgetriebe 18 weist ein drehfest gegenüber dem Elektromotor 12 festgelegtes Getriebegehäuse 36 auf, von dem ein um die Drehachse 24 drehbarer Abtriebsring 38 in radialer Richtung hervorsteht. Der Abtriebsring 38 dreht sich bei Betrieb des Elektromotors mit einer Drehfrequenz, die um das Untersetzungsverhältnis gegenüber der Drehfrequenz der Welle 14 herabgesetzt ist. An dem Abtriebsring 38 ist über ein bügelartiges Verbindungsteil 40 ein Drehelement 42 befestigt, das bei einer Drehung des Abtriebsrings 38 ebenfalls in eine Drehung um die Drehachse 24 versetzt wird. Das Drehelement 42 kann dabei auch einstückig mit dem Verbindungsteil 40 und dieses wiederum einstückig mit dem Abtriebsring 38 ausgebildet sein.

Auf dem Drehelement 42 ist ein zweiter Steuermagnet 44 drehfest befestigt, so dass sich dieser zweite Steuermagnet 44 beim Betrieb des Elektromotors 12 gegenüber dem ersten Steuermagneten 22 nur mit der um das Untersetzungsverhältnis reduzierten Drehfrequenz um die Drehachse 24 dreht.

Gegenüber dem zweiten Steuermagneten 44 ist ein zweiter Sensor 46 an dem Sensorträger 28 befestigt, der mit dem zweiten Steuermagneten 44 zusammenwirkt und dessen Drehung um die Drehachse 24 erfasst. Der zweite Steuermagnet 44 und der zweite Sensor 46 bilden somit gemeinsam einen zweiten Singleturn-Drehgeber 48, dessen Messsignale über eine weitere Leitung 50 ebenfalls der Auswerteeinrichtung 34 zugeführt werden.

**Fig. 2** zeigt die Vorrichtung 10 aus Fig. 1 in einem radialen Schnitt entlang der Linie II-II. Zur Veranschaulichung der Funktion der Vorrichtung 10 ist dabei das Verbindungsteil 40 gestrichelt in einer Position dargestellt und mit 40' bezeichnet, wie sie nach einer ganzzahligen Anzahl von Umdrehungen der Welle 14 bei einem gegebenen Untersetzungsverhältnis vorliegt. Mit einem Pfeil 52 ist in Fig. 2 angedeutet, wie sich bei jeder Umdrehung der Welle 14 der Abtriebsring 38 zusammen mit dem daran befestigten Verbindungsteil 40 kontinuierlich in Richtung des Pfeils 52 bewegt, bis nach einem Abschalten des Elektromotors 12 die mit 40' gekennzeichnete Lage des Verbindungsteils 40 erreicht ist. Der mit dem Verbindungsteil 40 drehfest verbundene zweite Steuermagnet 44 vollzieht diese - im Vergleich zur Drehung der Welle 14 langsamere - Drehbewegung mit, was auf der Stirnfläche 54 des Steuermagneten 44 durch die gestrichelte Linie und durch die Pole N' und S' angedeutet ist. Der zweite Sensor 46, der über den Sensorträger 28 drehfest gegenüber dem Elektromotor 12 festgelegt ist, vollzieht diese Drehung nicht mit und erfasst auf diese Weise den Drehwinkel des zweiten Steuermagneten 44. Dieser Drehwinkel ist somit ein Maß für die Anzahl der Umdrehungen, die die Welle 14 ausgehend von einer Referenzposition vollzogen hat. Aus dem über die Leitung 50 an die Auswerteeinrichtung 34 übertragenen Messsignal des zweiten Sensors 46 kann somit unter Verwendung des Untersetzungsverhältnisses des Untersetzungsgetriebes 18 von dem erfassten Drehwinkel auf die Anzahl der Umdrehungen der Welle 14 zurückgeschlossen werden. Die Winkelposition der Welle 14 innerhalb einer Umdrehung hingegen wird aus den Messsignalen abgeleitet, die von dem ersten Singleturn-Drehgeber 30 erzeugt werden. Falls es sich bei dem Elektromotor 12 um einen elektronisch kommutierten Elektromotor handelt, können die von dem ersten Singleturn-Drehgeber 30 erzeugten Signale auch zur elektronisch gesteuerten Kommutierung des Elektromotors 12 verwendet werden.

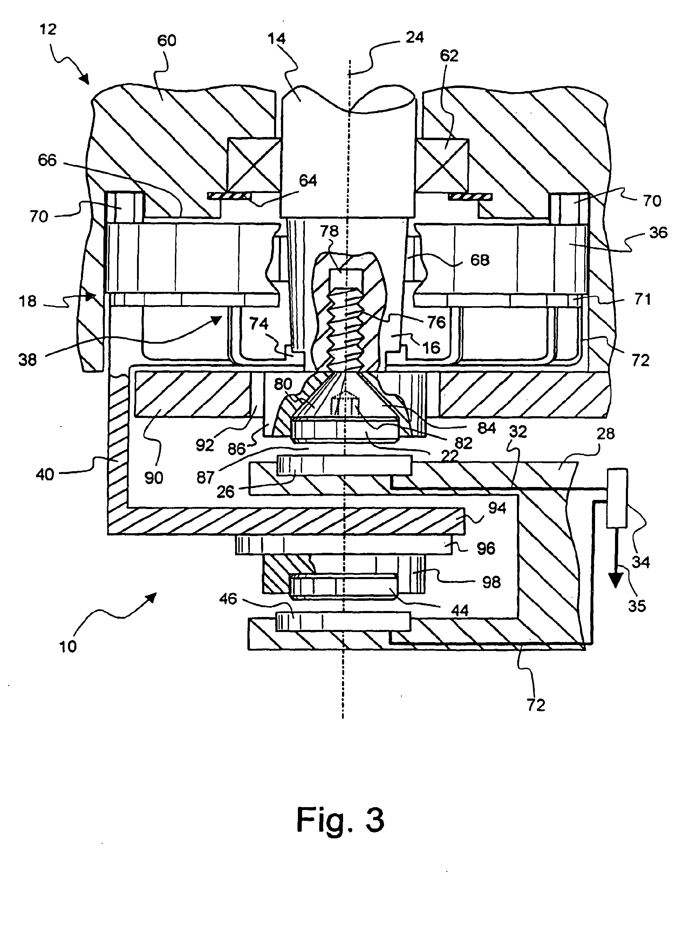

Eine konkrete Realisierung der vorstehend beschriebenen Vorrichtung 10 ist in **Fig. 3** in einem axialen Schnitt gezeigt. Dabei sind Bauteile, die in Fig. 1 schematisch wiedergegeben sind, mit gleichen Bezugsziffern bezeichnet.

In einem im wesentlichen ringförmigen B-Lagerschild 60 des Elektromotors 12 ist die Welle 14 des Motors aufgenommen und über ein mit 62 angedeutetes Wälzlager in radialer Richtung fixiert. Das Wälzlager 62 ist mit Hilfe eines Sprengrings 64 in einer entsprechend geformten Ausnehmung an einer Ringschulter 66 des B-Lagerschilds 60 gehalten. Die Welle 14 läuft in einen konusförmigen Wellenstutzen 16 aus, auf den ein mit 68 angedeuteter Antriebsring eines Untersetzungsgetriebes 18 drehfest aufgepresst ist. Das Untersetzungsgetriebe 18 weist ein Getriebegehäuse 36 auf, das über Fixierbolzen 70 drehfest gegenüber dem B-Lagerschild 60 festgelegt ist. Der Abtrieb des Untersetzungsgetriebes 18 wird von einem Abtriebsring 38 gebildet, der in dem dargestellten Ausführungsbeispiel aus einem flachen Ring 71 und mehreren davon in axialer Richtung abstehenden Stegen 72 gebildet wird, die dann wieder in radialer Richtung zu einer den Wellenstutzen 16 lose umfassenden Nabe 74 zusammenlaufen.

In einer mit einem Innengewinde 76 versehenen Bohrung 78 in dem Wellenstutzen 16 ist eine Senkkopfschraube 80 eingeschraubt, deren mit einem Innensechskant 82 versehener Senkkopf 84 einen als Messingformstück ausgebildeten Magnethalter 86 drehfest gegen das stirnseitige Ende des Wellenstutzens 16 verspannt. In den Magnethalter 86 ist ein erster Steuermagnet 22 drehfest eingesetzt. Der Steuermagnet 22 ist über einen Luftspalt 87 von einem damit zusammenwirkenden ersten Sensor 26 getrennt. Bei dem Sensor 26 handelt es sich bevorzugt um einen GMR-Sensor, der die von dem ersten Steuermagneten 22 bei einer Drehung hervorgerufenen Richtungsänderungen der Magnetfeldlinien erfasst und in elektrische Signale umwandelt. Durch Auswertung dieser elektrischen Signale in einer Auswerteeinrichtung 34 ist es dabei möglich, die relative Winkellage zwischen dem ersten Steuermagneten 22 und dem ersten Sensor 26 innerhalb einer Umdrehung absolut und mit hoher Genauigkeit zu erfassen, wie dies oben zu Fig. 1 erläutert wurde. Da derartige GMR-Singleturn-Drehgeber bekannt sind, bedarf es hierzu keiner weiteren Ausführungen.

Um die Richtung der von dem ersten Sensor 26 erfassten Magnetfeldlinien nicht durch das Magnetfeld zu verfälschen, das vom Elektromotor selbst erzeugt wird, ist der B-Lagerschild 60 mit einer Abschirmscheibe 90 verbunden, die zwischen dem ersten Sensor 26 und dem Elektromotor 12 angeordnet ist und eine zentrale Ausnehmung 92 für den Magnethalter 86 und den darin aufgenommenen Steuermagneten 22 aufweist.

Zwei der Stege 72 des Abtriebsringes 38 sind mit einem Verbindungsglied 40 in Form eines U-förmigen Bügels verbunden, der um 90° nach innen abgewinkelt ist und endseitig in einen Raum hineinreicht, der entlang der Drehachse 24 hinter dem ersten Sensor 28 vorgesehen ist. Auf dem in diesen Bereich hineinragenden abgewinkelten Abschnitt 94 des Verbindungsglieds 40 ist ein scheibenförmiges Abschirmelement 96 befestigt, das einen zweiten Magnethalter 98 mit einem darin aufgenommenen zweiten Steuermagneten 44 trägt. Letzterer wirkt mit einem zweiten GMR-Sensor 46 zusammen, der zusammen mit dem ersten Sensor 26 von einem Sensorträger 28 gehalten ist. Das Abschirmelement 96 dient dazu, den ersten und den zweiten Steuermagneten 22 bzw. 44 magnetisch voneinander zu entkoppeln, um eine unerwünschte Beeinflussung durch den dem jeweils anderen Sensor zugeordneten Steuermagneten zu verhindern. Der zweite Steuermagnet 44 und der zweite Sensor 26 bilden zusammen einen Multiturn-Drehgeber, wie dies oben zu Fig. 1 bereits erläutert wurde.

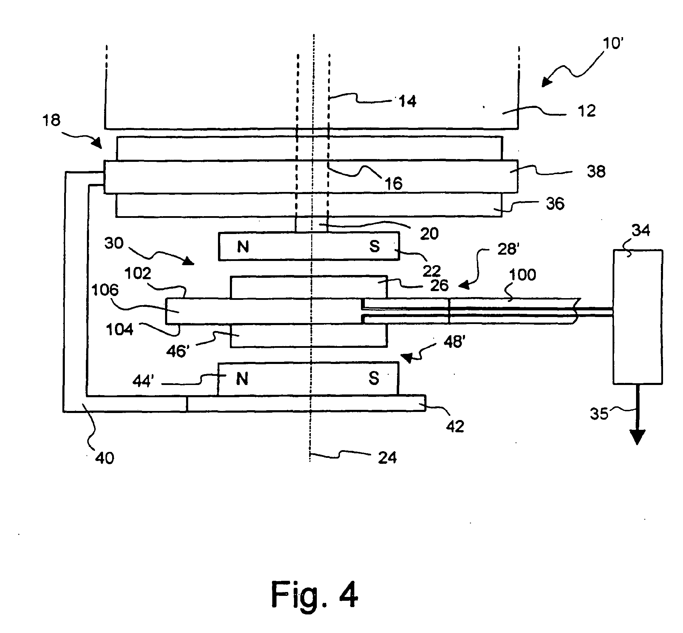

**Fig. 4** zeigt eine Variante der Vorrichtung in einer an die Fig. 1 angelehnten schematischen Darstellung. Der Sensorträger 28' der Fig. 4 ist, anders als der Sensorträger 28 der Fig. 1 bis 3, nicht bügelförmig ausgeführt, sondern als gehäusefestes Teil mit einem Trägerteil 100, an dessen Oberseite 102 der erste Sensor 26 und an dessen Unterseite 104 der zweite Sensor 46' des zweiten Drehgebers 48' befestigt ist. Der zweite Steuermagnet 44' ist dementsprechend jetzt auf der gegenüber liegenden Seite des Drehelements 42 befestigt. Insgesamt hat die in Fig. 4 gezeigte Anordnung in axialer Richtung noch eine etwas kürzere Baulänge, da ein Arm des U-förmigen Sensorträgers 28 der Fig. 1 entfällt. Um eine ausreichende Abschirmung zwischen den beiden Sensoren 26 und 46' zu gewährleisten, kann ein die beiden Sensoren 26 und 46' tragender Endabschnitt 106 des Teiles 100 aus einem magnetisch abschirmenden Werkstoff bestehen, so dass auf ein zusätzliches Abschirmelement verzichtet werden kann. Auf diese Weise kann die Erstreckung der Vorrichtung in axialer Richtung weiter verringert werden.

Naturgemäß sind im Rahmen der vorliegenden Erfindung vielfache Abwandlungen und Modifikationen möglich, ohne den Rahmen der Erfindung zu verlassen.

## Patentansprüche

1. Vorrichtung zum Erfassen des Absolutwerts der Drehstellung einer Welle (14), insbesondere der Welle eines Elektromotors (10), mit
a) einem ersten Singleturn-Drehgeber (30), der an der Welle (14) angeordnet und dazu ausgebildet ist, deren Drehstellung innerhalb einer einzigen Umdrehung zu erfassen, und mit
b) einer Multiturn-Drehgebereinheit zum Erfassen der Zahl der Umdrehungen dieser Welle (14), welche Drehgebereinheit aufweist:
I) Ein von der Welle (14) antreibbares Untersetzungsgetriebe (18), welches einen Abtrieb (38; 71) aufweist;
II) ein mit diesem Abtrieb (38; 71) verbundenes Drehelement (42; 94), das in einer gedachten Verlängerung der Welle (14) und koaxial zu dieser angeordnet ist; und
III) einen zweiten Singleturn-Drehgeber (48; 48'), der dazu ausgebildet ist, die Drehstellung des Drehelements (42; 94) innerhalb einer einzigen Umdrehung zu erfassen;
wobei das Untersetzungsgetriebe (18) die Welle (14) im wesentlichen umschliesst,
**dadurch gekennzeichnet, dass**
- der erste Singleturn-Drehgeber (30) an einem Wellenende (20) der Welle (14) angeordnet ist.
- sein Abtrieb (38; 71) über ein Verbindungsglied (40) um den ersten Singleturn-Drehgeber (30) herum mit dem genannten Drehelement (42; 94) verbunden ist.

2. Vorrichtung nach Anspruch 1, bei welcher der Abtrieb (38; 71) des Untersetzungsgetriebes (18) durch die Welle (14) in eine zu dieser koaxiale Bewegung versetzbar ist.

3. Vorrichtung nach Anspruch 2, bei welcher das Verbindungsglied einen etwa U-förmigen Bügel (40) aufweist.

4. Vorrichtung nach einem der vorhergehenden Ansprüche, bei welcher der erste Singleturn-Drehgeber (30) einen ersten Sensor (26) und einen mit diesem zusammenwirkenden Permanentmagneten (22) aufweist, welch letzterer im Bereich einer Stirnseite der Welle (14) angeordnet ist.

5. Vorrichtung nach Anspruch 4, bei welcher der erste Sensor als GMR-Sensor (26) ausgebildet ist.

6. Vorrichtung nach einem der vorhergehenden Ansprüche, bei welcher der zweite Singleturn-Drehgeber (48) einen zweiten Sensor (46) und einen mit diesem zusammenwirkenden Permanentmagneten (44) aufweist, welch letzterer auf dem Drehelement (42) angeordnet ist.

7. Vorrichtung nach Anspruch 6, bei welcher der zweite Sensor als GMR-Sensor (46) ausgebildet ist.

8. Vorrichtung nach einem der Ansprüche 4 bis 7, bei welcher zwischen erstem (30) und zweitem Drehgeber (48) eine magnetische Abschirmung (96; 106) vorgesehen ist, um diese Drehgeber mindestens teilweise magnetisch voneinander zu entkoppeln.

9. Vorrichtung nach Anspruch 8, bei welcher die Abschirmung (96; 106) im Bereich des Drehelements (42; 94) angeordnet ist.

10. Vorrichtung nach einem der vorhergehenden Ansprüche, bei welcher der erste (30) und der zweite Singleturn-Drehgeber (48) im Bereich eines zum Abtriebsende der Motorwelle (14) entgegengesetzten Wellenendes (16; 20) angeordnet sind.

11. Vorrichtung nach einem der Ansprüche 4 bis 7, bei welcher die Sensoren (26, 46') des ersten (30) und des zweiten (48') Singleturn-Drehgebers an einem gemeinsamen Sensorträger (106) angeordnet sind.

12. Vorrichtung nach Anspruch 11, bei welcher der gemeinsame Sensorträger (106) mindestens bereichsweise aus einem magnetisch abschirmenden Werkstoff ausgebildet ist, um die Sensoren (26, 46') der beiden Drehgeber (30, 48') magnetisch voneinander zu entkoppeln.

13. Vorrichtung nach einem der vorhergehenden Ansprüche, bei welcher eine Auswerteeinrichtung (34) vorgesehen ist, welche dazu ausgebildet ist, die Ausgangssignale der beiden Drehgeber (30, 48; 48') miteinander zu einem gemeinsamen Ausgangssignal (35) zu kombinieren.

## Claims

1. Device to capture the absolute value of the rotary position of a shaft (14), in particular the shaft of an electric motor (10), with
a) a first single-turn rotary transducer (30), which is arranged at one shaft end (20) of the shaft (14), and is designed to capture its rotary position within a single rotation, and with
b) a multi-turn rotary transducer unit, to capture the number of rotations of this shaft (14), said rotary transducer unit having:
i) reduction gearing (18), which can be driven by the shaft (14), and which has an output (38; 71);
ii) a rotary element (42; 94), which is connected to this output (38; 71), and is arranged in and coaxially to an imaginary extension of the shaft (14); and
iii) a second single-turn rotary transducer (48; 48'), which is designed to capture the rotary position of the rotary element (42; 94) within a single rotation;
the reduction gearing (18) essentially enclosing the shaft (14),
and its drive (38; 71) being connected to the above-mentioned rotary element (42; 94) via a connecting element (40) around the first single-turn rotary transducer (30).

2. Device according to Claim 1, wherein the output (38; 71) of the reduction gearing (18) can be put by the shaft (14) into a coaxial movement to it.

3. Device according to Claim 2, wherein the connecting element has an approximately U-shaped bow (40).

4. Device according to one of the preceding claims, wherein the first single-turn rotary transducer (30) has a first sensor (26) and a permanent magnet (22) which co-operates with it, and the latter of which is arranged in the region of a face of the shaft (14).

5. Device according to Claim 4, wherein the first sensor is in the form of a GMR sensor (26).

6. Device according to one of the preceding claims, wherein the second single-turn rotary transducer (48) has a second sensor (46) and a permanent magnet (44) which co-operates with it, the latter of which is arranged on the rotary element (42).

7. Device according to Claim 6, wherein the second sensor is in the form of a GMR sensor (46).

8. Device according to one of Claims 4 to 7, wherein between the first (30) and the second rotary transducer (48), magnetic shielding (96; 106) is provided, to decouple these rotary transducers magnetically at least partly from each other.

9. Device according to Claim 8, wherein the shielding (96; 106) is arranged in the region of the rotary element (42; 94).

10. Device according to one of the preceding claims, wherein the first (30) and second single-turn rotary transducers (48) are arranged in the region of a shaft end (16; 20) opposite the output end of the motor shaft (14).

11. Device according to one of Claims 4 to 7, wherein the sensors (26, 46') of the first (30) and second (48') single-turn rotary transducers are arranged on a common sensor support (106).

12. Device according to Claim 11, wherein the common sensor support (106) is formed at least in regions of a magnetically screening material, to decouple the sensors (26, 46') of the two rotary transducers (30, 48') magnetically from each other.

13. Device according to one of the preceding claims, wherein an analysis device (34) is provided, and is designed to combine the output signals of the two rotary transducers (30, 48; 48') with each other into a common output signal (35).

## Revendications

1. Dispositif pour saisir la valeur absolue de la position de rotation d'un arbre (14), en particulier de l'arbre d'un moteur électrique (10), avec
a) un premier codeur monotour (30) qui est disposé sur l'arbre (14) et est conçu pour saisir sa position de rotation en un seul tour ou dans un tour, et avec
b) une unité de codeur multitour pour saisir le nombre de tours de cet arbre (14), laquelle unité de codeur présente :
I) un réducteur (18) pouvant être entraîné par l'arbre (14), lequel présente une sortie (38 ; 71) ;
II) un élément tournant (42 ; 94) relié à cette sortie (38 ; 71) qui est disposé dans un prolongement imaginaire de l'arbre (14) et coaxialement à celui-ci ; et
III) un deuxième codeur monotour (48 ; 48") qui est conçu pour saisir la position de rotation de l'élément tournant (42 ; 94) en un seul tour ou dans un tour ;
le réducteur (18) entourant essentiellement ou sensiblement l'arbre (14),
**caractérisé en ce que**
- le premier codeur monotour (30) est disposé à une extrémité d'arbre (20) de l'arbre (14),
- sa sortie (38 ; 71) est reliée audit élément tournant (42 ; 94) par un organe de liaison (40) autour du premier codeur monotour (30).

2. Dispositif selon la revendication 1, dans lequel la sortie (38 ; 71) du réducteur (18) peut être mise par l'arbre (14) dans un mouvement coaxial à ce dernier.

3. Dispositif selon la revendication 2, dans lequel l'organe de liaison présente un étrier (40) approximativement en forme de U.

4. Dispositif selon l'une des revendications précédentes, dans lequel le premier codeur monotour (30) présente un premier capteur (26) et un aimant permanent (22) coopérant avec celui-ci, lequel aimant permanent est disposé dans la région d'une face frontale de l'arbre (14).

5. Dispositif selon la revendication 4, dans lequel le premier capteur est conçu comme capteur GMR (26).

6. Dispositif selon l'une des revendications précédentes, dans lequel le deuxième codeur monotour (48) présente un deuxième capteur (46) et un aimant permanent (44) coopérant avec celui-ci, lequel aimant permanent est disposé sur l'élément tournant (42).

7. Dispositif selon la revendication 6, dans lequel le deuxième capteur est conçu comme capteur GMR (46).

8. Dispositif selon l'une des revendications 4 à 7, dans lequel un blindage magnétique (96 ; 106) est prévu entre premier (30) et deuxième codeur (48) pour découpler au moins partiellement magnétiquement ces codeurs l'un de l'autre.

9. Dispositif selon la revendication 8, dans lequel le blindage (96 ; 106) est disposé dans la région de l'élément tournant (42).

10. Dispositif selon l'une des revendications précédentes, dans lequel le premier (30) et le deuxième codeur monotour (48) sont disposés dans la région d'une extrémité d'arbre (16 ; 20) opposée à l'extrémité de sortie de l'arbre de moteur (14).

11. Dispositif selon l'une des revendications 4 à 7, dans lequel les capteurs (26, 46') du premier (30) et du deuxième (48') codeur monotour sont disposés sur un support de capteurs commun (106).

12. Dispositif selon la revendication 11, dans lequel le support de capteurs commun (106) est constitué au moins par endroits d'un matériau de blindage magnétique pour découpler magnétiquement les capteurs (26, 46') des deux codeurs (30, 48') l'un de l'autre.

13. Dispositif selon l'une des revendications précédentes, dans lequel il est prévu un équipement d'évaluation (34) qui est conçu pour combiner entre eux les signaux de sortie des deux codeurs (30, 48 ; 48') en un signal de sortie commun (35).
